# EUROPEAN PATENT SPECIFICATION

(11) **EP 1 631 911 B1**
(45) Date of publication and mention of the grant of the patent: **14.02.2007**
(21) Application number: 04733418.0
(22) Date of filing: 17.05.2004
(51) Int. Cl.: G06F 13/28

(54) **METHOD AND DEVICE FOR TRANSFERRING DATA BETWEEN A MAIN MEMORY AND A STORAGE DEVICE**
VERFAHREN UND EINRICHTUNG ZUM TRANSFERIEREN VON DATEN ZWISCHEN EINEM HAUPTSPEICHER UND EINER SPEICHEREINRICHTUNG
PROCEDE ET DISPOSITIF DE TRANFERT DE DONNEES ENTRE UNE MEMOIRE PRINCIPALE ET UN DISPOSITIF DE STOCKAGE

(30) Priority: 26.05.2003 EP 03101516
(43) Date of publication of application: 08.03.2006
(73) Proprietor: Koninklijke Philips Electronics N.V., 5621 BA Eindhoven (NL)
(72) Inventor: VAN NIEKERK, Paulus, A., W., NL-5656 AA Eindhoven (NL)
(74) Representative: Damen, Daniel Martijn
(86) International application number: PCT/IB2004/050712
(87) International publication number: WO 2004/104846

(56) References cited:
- WO-A-99/34273
- US-A- 5 802 546
- US-A- 6 021 462
- US-A1- 2003 033 477

## Description

The invention relates to a method, and a corresponding device, of transferring data between a main memory and a storage device.

A storage device is typically any storage device that can read and possibly write blocks of data. Such storage devices are usually block or sector based, i.e. when only a part of a block, sector, etc. is required it must still be read completely, and when only a part of a block, sector, etc. is to be updated/written it must first be read completely, then modified and finally written completely.

In most computer-based systems, the memory of a data buffer can be "scattered," rather than contiguous. That is, different "fragments" of the buffer may physically reside at different memory locations. When transferring a "scattered" buffer of data from, for example, the main memory of a host computer to a secondary storage device, it is necessary to "gather" the different fragments of the buffer so that they preferably can be transferred to the secondary storage device in a more continuous manner. It is commonly known to use a data structure called Scatter-Gather List (SGL) for this purpose. Each element of a Scatter-Gather List points to or references a different buffer fragment, and the list effectively "gathers" the fragments together for the required transfer. A memory controller, such as a Direct Access Memory (DMA) controller, then performs the transfer as specified in each successive element of the scatter-gather list.

In a traditional file/storage system, a buffer cache is typically available allowing for access to data stored in the file/storage system without sector alignment restrictions. However, traditional file/storage systems do not typically allow for scattered data to be stored. An exception are the 'vwrite' and 'vread' commands on UNIX-like file systems.

For performance reasons, a real time file/storage system (RTFS) does not usually have a buffer cache, and any sector-unaligned writes are usually implemented as a read-modify-write procedure of complete sectors. Sector alignment is the fact that you can only read or write complete sectors and not each byte individually to or from a storage device. As mentioned, SGLs are typically used to describe data locations that are scattered over the main memory space, e.g. in connection with a data transfer to or from disk or main memory locations e.g. by a DMA capable device.

In an RTFS, partial block/sector writes typically result from requirements on persistency of the data, e.g. a time limit and/or a limit on the amount of data lost during a power failure. In connection with data streams and in particular very thin data streams, e.g. CPI (Characteristic Point Information) or other kinds of meta data, this could well result in partial block updates. Another source of partial writes could come from appending data to existing data e.g. recordings in a Personal Video Recorder (PVR) application based on a disc storage device. Partial reads are very common for example in a trick play scenario using a PVR application. A data stream is typically a continuous flow of data. Once started, no control is needed from middleware. The data transfer will be regulated by the components that are using it. Normally there is a buffer mechanism to provide 'rubber banding' between source and sink in a stream. Handling of the buffer is the major interface between components that use streaming data.

A previously known way of doing a partial sector update is to execute a command to read the complete block, and wait until the entire block has been read.

Then to modify/combine the data read with the new data, and finally then to execute a command to write the updated block. These three steps are usually part of the same context, i.e. thread, process, task, etc., thereby causing inefficient CPU usage because of the required context switching, and causing inefficient storage device usage. The disk I/O is slow compared to the CPU, whereby the CPU typically will wait for the disk to complete each step before processing the next. The waiting CPU may in this wait state be interrupted by another thread, process, task, etc. thereby causing context switching. Further, if only a single thread, process, task, etc. is available in the CPU then the waiting of the CPU for the slower disk I/O could very well limit the number of sector writes per second. The inefficient storage device usage is caused since, either the read and write commands of the same block are atomic as seen by the device, whereby the throughput of the device is influenced by the inefficient CPU usage, or they are not atomic, whereby other disk requests can intervene. If they are not atomic, additional seek overhead is incurred from and to this same disk block location.

In some cases the impact on the throughput is also dependent on latency, where a big latency results in a big impact on the throughput. Bigger latencies are present in networked storage devices, e.g. SBP-2 over IEEE 1394 or Ethernet based networks.

US Patent 6021462 discloses a technique for accessing a series of secondary storage devices where a reduced amount of main memory is needed to implement the data transfer. The technique operates to share control information stored in the main memory so that most of the main memory allocated to implementing a data transfer is shared by the series of the secondary storage drives. The technique applies to secondary storage devices configured as a Redundant Array of Inexpensive Disks (RAID).

US Patent Application 2003/0033477 discloses a code efficient transfer method in response to a single host input/output request generating a single scatter gather list. An SGL entry may contain a flag field, which may be dedicated for certain parameter information including direction read/write.

It is an object of the invention to provide a method (and corresponding device) of data transfer that solves the above-mentioned problems. A further object is to provide this in a simple and efficient way. Another object is to enable scattered data to be read/written from/to a disk of a storage device. Yet a further object is to provide an alternative interface to traditional ATA (Advanced Technology Attactchment)/IDE (Integrated Drive Electronics) read and/or write commands.

This is achieved by a method (and corresponding device) of transferring data between a main memory and a storage device in a storage system, the storage system comprising
- a first scatter gather list data structure arranged to comprise zero or more scatter gather list elements referencing a disk location that is either source or destination of the data to be transferred,
- a second scatter gather list data structure arranged to comprise zero or more scatter gather list elements referencing a part of the main memory that is either source or destination of the data to be transferred, and
- a direction indicator for each scatter gather list element of the first scatter gather list data structure or for each scatter gather list element of the second scatter gather list data structure, where the direction indicator specifies whether the disk location is source and the part of the main memory is destination or specifies whether the disk location is destination and the part of the main memory is source,
   the method comprising the step of generating
- a first scatter gather list data structure and a second scatter gather list data structure,
characterized in that the storage system further comprises
- a third scatter gather list data structure, and
- a fourth scatter gather list data structure,
wherein the reading and writing in the storage system is represented by scatter gather list elements in the third and the fourth data structure.

In this way, a simple and efficient way of handling read/write operations is provided. Especially in real-time storage systems. Further, no actual data is moved during CPU processing, since only references to the data, i. e. tuples, are copied between SGLs which greatly reduces storage and bandwidth requirements.

Advantageous embodiments of the method according to the present invention are defined in the sub-claims.

The present invention also relates to a device corresponding to the method according to the present invention.
More specifically, the invention relates to a device for transferring data between a main memory and a storage device in a storage system, the storage system comprising
- a first scatter gather list data structure arranged to comprise zero or more scatter gather list elements referencing a disk location that is either source or destination of the data to be transferred,
- a second scatter gather list data structure arranged to comprise zero or more scatter gather list elements referencing a part of the main memory that is either source or destination of the data to be transferred, and
- a direction indicator for each scatter gather list element of the first scatter gather list data structure or for each scatter gather list element of the second scatter gather list data structure, where the direction indicator specifies whether the disk location is source and the part of the main memory is destination or specifies whether the disk location is destination and the part of the main memory is source,
characterized in that :
the storage system further comprises
   - a third scatter gather list data structure, and
   - a fourth scatter gather list data structure,
wherein the reading and writing in the storage system is represented by scatter gather list elements in the third and the fourth data structure.

Advantageous embodiments of the device according to the present invention are defined in the sub-claims.

Further, the invention also relates to a computer readable medium having stored thereon instructions for causing one or more processing units to execute the method according to the present invention.

In the following, a first scatter gather list data structure is denoted Disk Input SGL (201)/SGL1, a second scatter gather list data structure is denoted Memory Input SGL (202)/ SGL2, a third scatter gather list data structure is denoted Output Memory SGL (230)/SGL7, a fourth scatter gather list data structure is denoted Output Disk SGL(231)/SGL8, a filth scatter gather list data structure is denoted Disk Input SGL (208)/SGLS, a sixth scatter gather list data structure is denoted Memory Input SGL (209)/SGL6, a seventh scatter gather list data structure is denoted Disk Output SGL I (232)/SGL4, an eight scatter gather list data structure is denoted Memory Output SGL (233) /SGL3.
Figure 1 schematically illustrates a Scatter-Gather List (SGL);
Figure 2 illustrates SGLs used as part of a transfer according to the present invention;
Figures 3a and 3b illustrates SGLs used as part of a transfer according to the present invention in connection with partial block read/write;

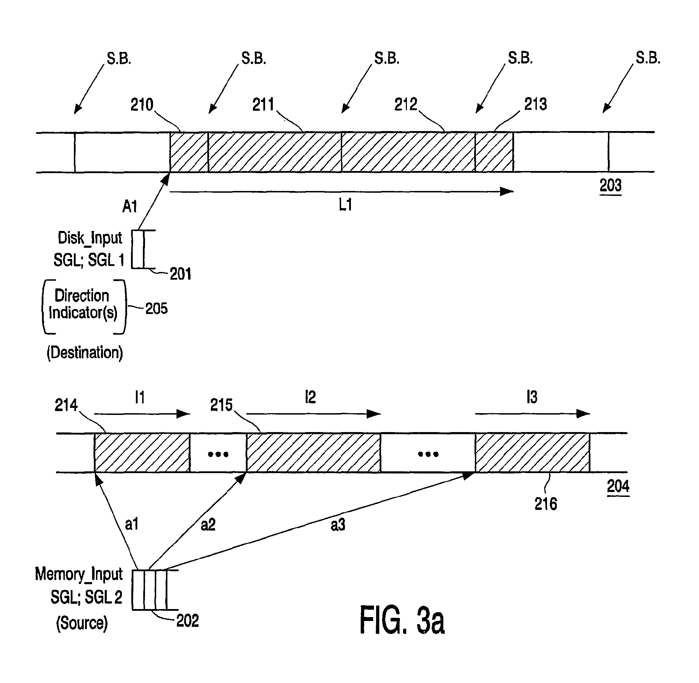

Figure 3a illustrates SGLs before sector alignment according to the present invention has been performed;

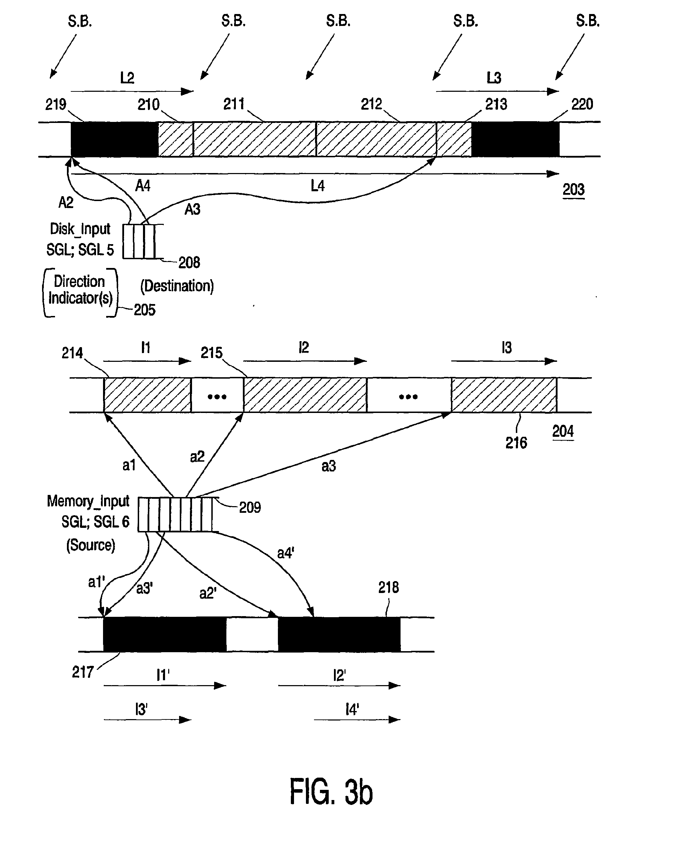

Figure 3b illustrates SGLs after sector alignment according to the present invention has been performed;

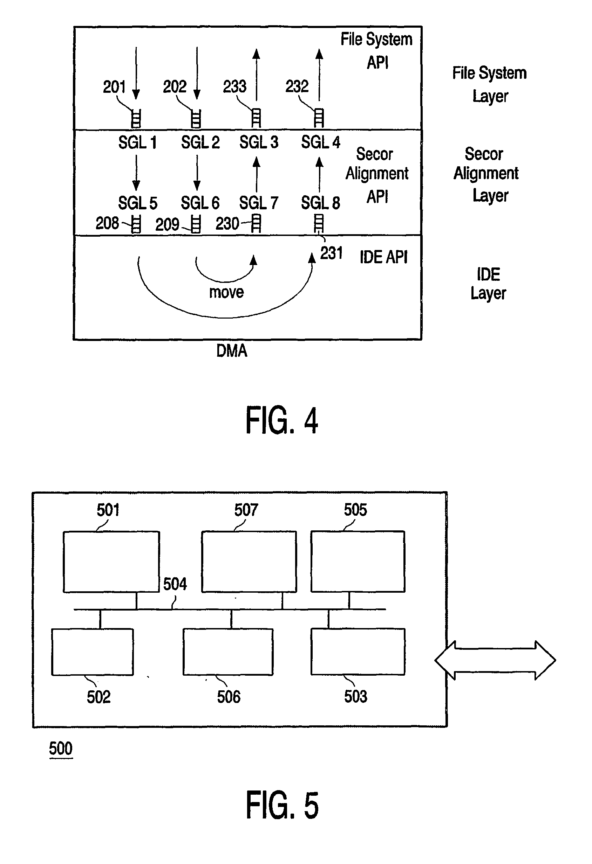

Figure 4 schematically illustrates layers of an interface according to an embodiment of the present invention;
Figure 5 schematically illustrates one example of a device according to an embodiment of the present invention.

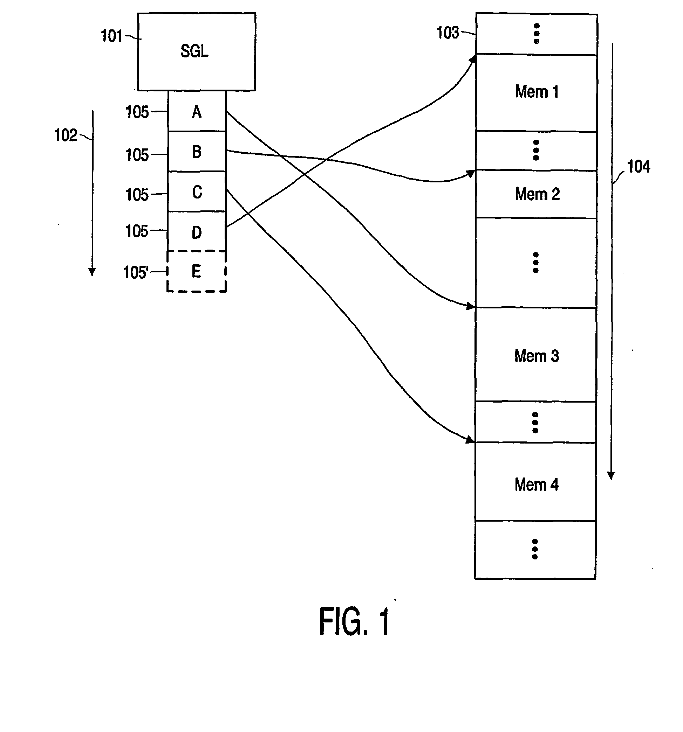

Figure 1 schematically illustrates a Scatter-Gather List (SGL). The SGL (101) is used to describe a logical sequence of data as indicated by the arrow (102). The sequence of data may be scattered over the main memory (103) or, according to the present invention, a disk of a storage device (103). The data described by the SGL (101) may be located in data areas of different or same size. The memory/disk address order is indicated by an arrow (104).

The particular SGL instantiation (101) in this Figure has a fixed number of scatter-gather units (105, 105'), designated 'A', 'B', 'C', 'D' and 'E', and describes the logical sequence of data as stored in memory/disk locations (103) Mem3, Mem2, Mem4 and Mem 1 in that particular order. The SGL instantiation (101) is not completely filled, as one additional continuous data area can be appended, i.e. in SG-unit 'E' (105'). Note that the order (102) of the logical data ('A', 'B', 'C', 'D') does not have to be the same as the memory/disk-address order (104). Further note that the shown units 'A' through 'E' are internal to the SGL (101).

An SGL is according to the present invention implemented as a FIFO (first in first out) queue comprising SG-units (105; 105'), where each unit is a continuous piece of memory and has a reference to a start address (e.g. by using a pointer, an address offset, etc.) of a memory/disk location and specifies the size or length, etc. of the data stored at that particular memory/disk location usually expressed in terms of bytes. The SG-units are simple tuples (a, l), where 'a' designates the start address and '1' the length. There are no alignment restrictions on address and/or length for SGLs.

No actual data of the memory/disk location is stored in an SGL or transferred between SGLs. Only the tuple is stored or transferred, which greatly reduces storage and bandwidth requirements.

In short, an SGL is an efficient way of referencing data stored in a memory or according to the present invention on a disk, even if the data is scattered/non-contiguous.

In the following, small letters are used for tuples relating to main memory while capital letters are used for tuples relating to disk/storage memory, i.e. (aᵢ, lᵢ) and (Aⱼ, Lⱼ), respectively.

According to the present invention, a Direction Indicator (not shown) has to be specified, where it is used to specify whether the disk location is source and the part of the main memory is destination or the other way around. Preferably, each tuple in an SGL for a disk comprises a Direction Indicator (not shown) that specifies the direction of the transfers described by that particular tuple, as will be explained in greater detail in the following. Preferably, the Direction Indicator is implemented by a single bit. Preferably, one of the bits in the 64-bit disk addresses may be used since they are unused, since in for example ATA6 the size of an LBA is 48 bit and a sector is 512 bytes. This leaves 64 - 48 - 9 = 7 bits, where one of them may be used as the Direction Indicator for a given tuple of the Disk SGL. Alternatively, another unused bit may be used e.g. for other file controllers, like SCSI, etc. As another alternative, the Direction Indicator may also be stored in another way, e.g. as a separate SGL, in each tuple in a main memory SGL, etc.

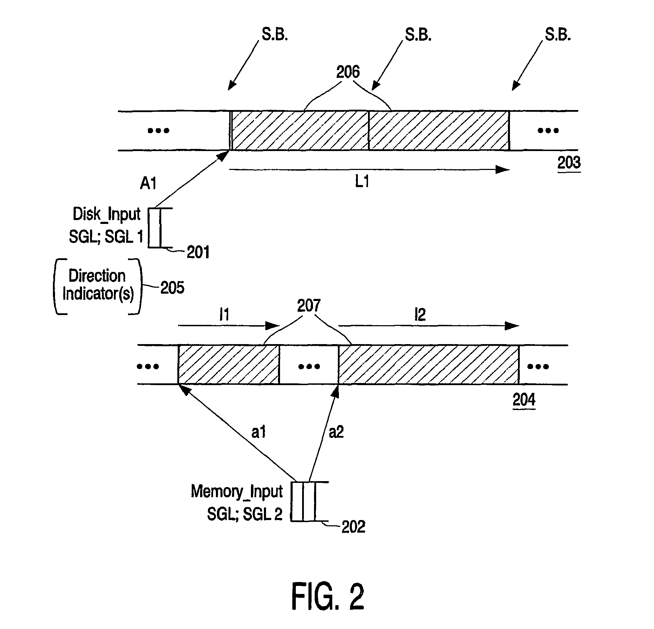

Figure 2 illustrates SGLs used as part of a transfer according to the present invention. Shown are a Memory Input SGL (202) (corresponds to SGL2 in Figure 4) and a Disk Input SGL (201) (corresponds to SGL 1 in Figure 4). The Memory Input SGL (202) contains the tuples (a1, l1) and (a2, l2) and thereby references a (scattered) data area (207) to store data in (if reading from the disk) or to be read from (if writing to the disk) in the main memory (204) at address a1 having a length l1 and at address a2 having a length l2.

The Disk Input SGL (201) contains the tuple (A1, L1) and thereby references a data area (206) of the storage device (203) where data (207) being referenced by the Memory Input SGL (202) is to be stored (if writing to disk) or where data is located and is to be stored in the data area being referenced the Memory Input SGL (202) (if reading from disk). The data of the Disk Input SGL (201) is in this example continuous but may according to an aspect of the present invention be scattered. The Disk Input SGL (201) also comprises a 'Direction Indicator' (205) according to the present invention for each tuple stored in the Disk Input SGL (201), i.e. one for this example. Preferably, this Direction Indicator (205) is implemented by a single bit as explained above. The Direction indicator (205) specifies if data referenced by a given tuple of a Disk SGL is to be transferred from the storage device (203) to the main memory (204) or vice versa. In this way, a simple and small indicator of the direction of the transfer is obtained using only an existing surplus bit for each tuple and enabling an efficient sector alignment as will be explained in the following.

Also indicated in connection with the storage device (203) are indications of sector boundaries (S.B.). In this particular simple example, the data area (206) of the storage device (203) being used either for reading or writing (as being given by the Direction indicator (205)) starts and ends at a sector boundary, i.e. no partial block read/write is necessary.

During operation, read, write and modify (which is a combination of read and write) commands are simply handled by queuing tuples to the Disk Input SGL (201) and the Memory Input SGL (202) and setting the Direction indicator (205) for each tuple in the Disk Input SGL (201) to specify what is source and what is destination of the main memory and the disk.

After 'enough' is in the memory and disk SGLs, actual transfers, i.e. the physical transfer of data, can take place asynchronously under the control of a storage control layer and/or an interface like IDE, ATA, etc. The tuples of the SGLs (201, 202) need to be translated into standard ATA/IDE commands. 'Enough' is preferably dependent on at least one pre-determined criterion, e.g. a given time period lapsed since last actual transfer and/or a given size of the total amount of data represented by the SGLs and so on. The usage of SGLs according to the present invention describes sort of 'virtual' transfers between main memory and disk of a storage device and when 'enough' data is present actual physical transfers take place.

In this simple example, a transfer command to transfer the contents of the data area (207) of the main memory (given by a1, l1 and a2,l2) to the specified data area (206) of the storage device (starting at A1 and having a length of L1), i.e. a write command in the traditional sense, would cause the two tuples (a1, l1) and (a2,l2) to be put in the Memory Input SGL and the tuple (A1, L1) to be put in the Disk Input SGL while the Direction indicator (205) of the tuple (A1, L1) of the Disk Input SGL is set to specify that the direction is from the main memory to storage device, e.g. simply by setting (or alternatively by clearing) a bit, as explained above. In this example L1 is equal to l1 + l2.

When the actual transfer takes place, e.g. after other write, read and/or modify commands have caused more tuples to be added to the SGLs, the specific content of the data area (207) in the main memory is stored in the data area (206) of the storage device. The inherent FIFO structure of the SGLs according to the present invention ensures that various commands are handled in the correct order.

For a transfer command specifying to transfer the respective contents the other way around (a read command in the traditional sense), i.e. from the storage device to the main memory, only the value of the Direction indicator (205) of the tuple (A1, L1) of is changed. The same tuples should be put in the SGLs.

In short, a read or write process is handled by specifying a data area (206) of the storage device (preferably using one or more tuples in the Disk Input SGL) and specifying a data area (207) of the main memory (using one or more tuples in the Memory Input SGL) and the value of the Direction indicator (205) preferably stored for each tuple in the Disk Input SGL, where the specific value of the Direction indicator (205) specifies whether it is a read (i.e. transferring from storage device to main memory) or write (i.e. transferring from main memory to storage device) process for the particular one or more tuples of the Disk Input SGL (201) and the one or more corresponding tuples of the Memory Input SGL (202).

In this way, it is possible in a storage system to enable read/write operations in a very simple and efficient way. Even if the operations are based on partial blocks/sectors, as will be explained in connection with Figures 3a and 3b.

Figures 3a and 3b illustrates SGLs used as part of a transfer according to the present invention in connection with partial block read/write.

Figure 3a illustrates SGLs before sector alignment according to the present invention has been performed. Shown are a Memory Input SGL (202) (corresponding to the Memory Input SGL in Figure 2) and a Disk Input SGL (201) (corresponding to the Disk Input SGL in Figure 2), but for another exemplary situation. This exemplary situation illustrates a partial block read/write operation. In this specific example, the direction of the transfer, as specified by the Direction indicator (205), is from main memory (204) to the disk/storage device (203), i.e. a write operation. The write concerns a partial block (210) followed by two full blocks (211, 212) followed by another partial block (213), where all the blocks (210 - 213) are continuous on the storage device and start at address A1 and have a total length of L1 as given by the tuple (A1, L1) in the Disk Input SGL (201). The source main memory locations are scattered and consist of three units (214, 215, 216) as given by the tuples (a1, l1), (a2, l2) and (a3, l3) in the Memory Input SGL (202). The dashed areas are thus described by the input SGLs (201, 202) and there is no alignment with sector boundaries. L1 is in this example equal to the sum of l1,l2 and l3 since the length of source and destination must be the same for doing access to a storage device. The input SGLs (201, 202) may as described earlier contain more data, but that data is not shown or discussed in order to simplify the example.

As mentioned an SGL is basically implemented as a queue of such tuples, providing additional operations and optimizations as well.

A 1 points somewhere in a sector between two sector boundaries (S.B.) where the first part of that sector is to be untouched while the second part (210) is to be modified as indicated by a dashed area. As previously mentioned, reading (and writing) from disk can only be done in integral numbers of sectors. The addresses a1, a2 and a3 can point anywhere in main memory, provided this memory is accessible to the hard- and/or software doing the transfer.

The process of sector alignment is further explained in connection with Figure 3b.

Figure 3b illustrates SGLs after sector alignment according to the present invention has been performed. Shown are a Memory Input SGL (209) (corresponding to SGL 6 in Figure 4) and the Disk Input SGL (208) (corresponding to SGL 5 in Figure 4) and their associated memories (203, 204), respectively, after sector alignment has been performed and the Disk memory (203) no longer contains any partial block accesses. The Disk Input SGL (208) and the Memory Input SGL (209) in this Figure are generated on the basis of the Disk Input SGL (201 in Figure 3a) and the Memory Input SGL (202 in Figure 3a) in Figure 3a by a sector alignment layer/application according to the present invention. As indicated in connection with Figure 3a, the data content of the main memory is, in this example, to be transferred to the disk. A partial block read is much simpler to handle and will be explained later.

Also shown is temporary memory blocks (217, 218) being a part of the main memory and used in the sector alignment process. The temporary memory blocks (217, 218) have at least the same size as the storage device blocks/sectors and are used for 'head' and 'tail' for the partial blocks as explained in the following.

The sector alignment results in added sector parts (219, 220) that are added at the start and at the end of the transfer, respectively, thereby giving complete blocks/sectors.

The Disk Input SGL (208) and the Memory Input SGL (209) are generated on the basis of the Disk Input SGL (201 in Figure 3a) and the Memory Input SGL (202 in Figure 3a) in Figure 3a according to the following in order to perform sector alignment:

First the head sector of the disk is pre-fetched/read before any writing takes place as it contains data that is to be untouched (219) by the write/modify step (if the data to be transferred does not start at a sector boundary). This is done by en-queuing a tuple (a1',l1') in the Memory Input SGL (209) and by en-queuing a tuple (A2,L2) in the Disk Input SGL (208) and specifying in the Direction Indicator of (A2,L2) to read (i.e. the disk is source and main memory is destination for the data referenced by (A2,L2)/(a1',l1')). The tuple (a1',I1') references data in the temporary memory block (217).

Then the tail sector of the disk is pre-fetched/read (if the data to be transferred does not end at a sector boundary) in this embodiment also before any writing takes place as it also contains data to be untouched (220).

This is done by en-queuing a tuple (a2',l2') in the Memory Input SGL (209) and by en-queuing a tuple (A3,L3) in the Disk Input SGL (208) and specifying in the Direction Indicator of (A3,L3) to read (i.e. the disk is source and main memory is destination for the data referenced by (A3,L3)/(a2',l2')). The tuple (a2',l2') references data in the temporary memory block (217).

In general, the reading of the tail sector just has to be performed before writing data to the tail sector. It does not matter if the tuples (a2',l2') and (A3,L3) is en-queued before or after the tuples (a1',l1') and (A2,L2) as long as they are en-queued before any tuples defining a write to the tail sector are en-queued, which ensures that the data (219) of the head and the data (220) of the tail that is to be untouched remains so after writing.

After this, the head of the head sector (219), i.e. the part of the head sector that is to be untouched by the un-aligned writing, is written.

This is done by en-queuing a tuple (a3',l3') in the Memory Input SGL (209) where a3' is equal to a1' and l3' < l1'. More specifically, l3' is equal to the length of a sector minus the length of the data (210) in the head sector that is to be written. Alternatively, l3' may be determined as A1 (from the Disk Input SGL in Figure 3a) minus A2.

After this, the new/modified data (214, 215, 216) is written.

This is done by en-queuing the tuples (a1, l1), (a2, l2) and (a3, l3) in the Memory Input SGL (209) from the Memory Input SGL (202) of Figure 3a.

And finally the tail of the tail sector (220), i.e. the part of the tail sector that is to be untouched by the un-aligned writing, is written.

This is done by en-queuing a (a4',14') in the Memory Input SGL (209) where 14' is equal to the length of a sector minus the length of the data (213) in the tail sector that is to be written. a4' is equal to a2' + the length of the data of the tail sector that is to be written. Please note, that a2'+l2' is equal to a4'+14', i.e. they both end at the end of the tail sector.

The tuples (a3',l3'), (a1, l1), (a2,l2), (a3, l3) and (a4',l4') are related to the disk by modifying the tuple (A1,L1) of the Disk Input SGL (201 in Figure 3a) by en-queuing the tuple (A4,L4) where A4 is equal to A2 and L4 is equal to l3'+ l1 + l2 + l3 + l4', i.e. the sum of the length of the data to be written/modified (214, 215, 216) and the part (219) of the head to be untouched and the part of the tail (220) to be untouched. The Direction Indicator for (A4,L4) is set to specify a write.

After this the tuples relating to the disk references/defines a sector aligned data area, which is ready for being transferred to a block/sector storage device. The SGLs (208, 209) may then be used as input for a suitable conversion mechanism to translate their content into command for the storage device interface, e.g. an IDE interface.

For reading of partial blocks, the added partial sectors (219, 220) are simple discarded when they are being fetched. For a partial block read (using the same data areas) the tuples in the SGLs would be (A4,L4) and (a3',13'), (a1,l1), (a2,l2), (a3,l3) and (a4',l4'). However, for this the pre-fetching/reading of the head and tail is not needed. The data of the head of the head sector (219) and the data of the tail of the tail sector (220) is simply discarded after being read. In other words, reading every sector (219+210, 211, 212, 213+220) (in any appropriate order) from the storage device (506), discarding a part (219) of the head sector (219+210) that does not comprise any of the data to be transferred if the data to be transferred does not start at a sector boundary (S.B.), and discarding a part (220) of the tail sector (213+220) that does not comprise any of the data to be transferred if the data to be transferred does not end at a sector boundary (S.B.), where the reading is represented by scatter gather list elements (105) in the Input Disk Input SGL (208) and the Memory Input SGL (209).

If the data to be transferred do start at a sector boundary, then (A2;L2) and (al',l1') and (a3',13') are omitted/not generated, and A4 = A1.

If the data to be transferred do end at a sector boundary, then (A3;L3), (a2',l2') and (a4',l4') are omitted/not generated, and A4+L4 = A1+L1, i.e. they end at the same place.

The described sector alignment process do not block the CPU as is the case for the previously described prior art process, since the task(s) of the CPU is de-coupled from the relatively much slower Disk I/O, as opposed to the three steps of prior art, where Disk I/O is needed after each step.

Further, no actual data is copied, since only references to the data, i.e. tuples, are copied between SGLs which greatly reduces storage and bandwidth requirements.

In the sector alignment according to the present invention, the "modifying" part now happens "automatically", because the main memory is now part of the read as well as the write commands. The only restriction now is that the write may only take place after the read has resulted in the requested data in the requested memory locations. Such restrictions are easily handled by a disk scheduler on top of the storage device, as already known. That scheduler can now also easily optimize the throughput of the storage device.

In a situation where the entire data area referenced by a tuple in the Disk Input SGL (201 in Figure 3a) is within a single sector it is only necessary to pre-fetch once and not twice as above, since this sector is both head and tail. In this situation the pre-fetch has to be done before any writing. The sector alignment process may then e.g. be reading the single sector from the storage device (506) and store it in a temporary sector (217; 218), and after the single sector is read writing the head of the single sector if the data to be transferred does not start at a sector boundary (S.B.), writing the data to be transferred, and writing the tail of the single sector if the data to be transferred does not end at a sector boundary (S.B.).

The function of the variouag tuples is summarised in the following table:

| Unit | Description |
|---|---|
| (a1', l1') | Head sector. Is a temporary buffer that can hold exactly one sector. For a1', no sector alignment requirements hold. Corresponds to (A2, L2). Read. |
| (a2',l2') | Tail sector. Idem. Corresponds to (A3, L3). Read. |
| (a3',l3') | The head of the head sector. The part of the sector that may not be touched. So, a3' is equal to a1', but l3' < l1'. Write. The units a3', a1, a2, a3, a4' correspond to (A4, L4). |
| (a1, l1) | Is the original (a1, l1) from Figure 3a. Write. |
| (a2, l2) | Is the original (a2, l2) from Figure 3a. Write. |
| (a3,l3) | Is the original (a3, l3) from Figure 3a. Write. |
| (a4',l4') | The tail of the tail sector. The part of the sector that may not be touched. Note that a2' + l2' is equal to a4' + l4', they both end at the end of the tail sector. Write. |

Figure 4 schematically illustrates layers of an interface according to an embodiment of the present invention. Shown are a Storage system Layer/File Administration Layer, a Sector Alignment Layer, a Disk Interface/IDE Layer, and a DMA engine or the like. Further shown are a Disk Input SGL/SGL1 (201) corresponding to the one in Figures 2 and 3a, a Memory Input SGL/SGL2 (202) corresponding to the one shown in Figures 2 and 3a, another Disk Input SGL (208)/SGL5 corresponding to the one shown in Figure 3b, another Memory Input SGL (209)/SGL6 corresponding to the one shown in Figure 3b.

In a preferred embodiment, an additional output Memory SGL (230) is used to describe the main memory that already has been part of an actual transfer, i.e. after any sector alignment if needed. Each transfer 'moves' memory from the Input Memory SGL (209) to the output Memory SGL/SGL 7 (230). The data itself is not moved, only a description of it, i.e. the relevant tuple(s). Further, is an additional Output Disk SGL/SGL8 (231 of Figure 4) used to describe the disk location(s) that already has/have been part of an actual transfer in a similar manner.

In other words, after part of a transfer has taken place, that part is moved from the input SGLs (208, 209) to the corresponding output SGLs (231, 230), i.e., from SGL 5 to 8, and SGL 6 to 7 as shown in Figure 4. This allows for easy and simple monitoring of the transfer processes that have taken place, which may be useful for variouag applications, other processes, etc.

In a further embodiment, the Sector Alignment Layer also comprises reverse processing that takes place on the output SGLs 7 (230) and 8 (231), in order to recycle the temporary memory of the temporary head and tail sectors (217 and 218 in Figure 3b), and make its output SGLs 3 (233) and 4 (232) consistent with the original input SGLs 2 (202) and 1 (201). This allows for easy re-use of used memory in a very simple manner.

Some bits in the 64-bit disk addresses are unused, since in ATA6 the size of an LBA is 48 bit and a sector is 512 bytes. This leaves 64 - 48 - 9 = 7 bits, where one of the bits may be used as the Direction Indicator, as explained earlier. Unaligned write accesses are translated into (aligned) read accesses (of head and tail sectors) followed by aligned write accesses, as described in connection with Figures 3a and 3b. In order to keep it simple, the result of such a translation is again a single SGL, but the read requests have, in one embodiment, the unused bit set (a cleared bit thereby signifying a write). Alternatively, a cleared bit may signify a read request. The IDE/Disk Layer ensures that the read requests have finished before writing the data that was just read to the disk. Whenever, the direction indicator of SGL 5 (208) and/or SGL 6 (209) changes, then it should be ensured that a read is finished before writing whenever they are accessing the same memory location. This may be important especially for network storage devices.

Any half-word alignment requirement that may exist due to hardware requirements is dealt with in the normal way.

Figure 5 schematically illustrates one example of a device according to an embodiment of the present invention. Shown is a device (500) according to an embodiment of the present invention, the device (500) comprising one or more micro-processors (501) connected with a main memory (502) and at least one storage device (506) via an internal data/address bus (504) or the like. Additionally, the device (500) may also be connected to or comprise a display (507) and/or communication means (501) for communication with one or more remote systems via a network. The memory (502) and/or storage device (506) are used to store and retrieve the relevant data together with executable computer code for providing the functionality according to the invention. The micro-processor(s) (501) is responsible for generating, handling, processing etc. of the SGLs according to the present invention.

The storage device (506) comprises one or more storage devices capable of reading and possibly writing blocks of data, e.g. a DVD, CD, optical disc, PVR, etc. player/recorder and/or a hard disk (IDE, ATA, etc), floppy disk, smart card, PCMCIA card, etc. The storage device may also be a network disk.

In the claims, any reference signs placed between parentheses shall not be constructed as limiting the claim. The word "comprising" does not exclude the presence of elements or steps other than those listed in a claim. The word "a" or "an" preceding an element does not exclude the presence of a plurality of such elements.

The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A method of transferring data between a main memory (502) and a storage device (506) in a storage system, the storage system comprising
- a first scatter gather list data structure (201; SGL 1) arranged to comprise zero or more scatter gather list elements (105) referencing a disk location (203) that is either source or destination of the data to be transferred,
- a second scatter gather list data structure (202; SGL2) arranged to comprise zero or more scatter gather list elements (105) referencing a part of the main memory (204) that is either source or destination of the data to be transferred, and
- a direction indicator (205) for each scatter gather list element (105) of the first scatter gather list data structure (201; SGL 1) or for each scatter gather list element of the second scatter gather list data structure (202; SGL2), where the direction indicator (205) specifies whether the disk location (203) is source and the part of the main memory (204) is destination or specifies whether the disk location (203) is destination and the part of the main memory (204) is source,
the method comprising the step of generating
- a first scatter gather list data structure (201; SGL1) and a second scatter gather list data structure (202; SGL2),
**characterized in that** the storage system further comprises
- a third scatter gather list data structure (208; SGL 5), and
- a fourth scatter gather list data structure (209; SGL6),
wherein the reading and writing in the storage system is represented by scatter gather list elements (105) in the third (208; SGL5) and the fourth (209; SGL6) data structure.

2. A method according to claim 1, **characterized in that** the method further comprises a step of performing sector alignment of data to be transferred (214, 215, 216) prior to an unaligned write to the storage device (506), the step comprising:
- reading a head sector (219+210) from the storage device (506) if the data to be transferred does not start at a sector boundary (S.B.) and storing it in a temporary head sector (217),
- reading a tail sector (213+220) from the storage device (506) if the data to be transferred does not end at a sector boundary (S.B.) and storing it in a temporary tail sector (218), and
after the head and tail sector (219+210; 213+220) is read
- writing the head (219) of the head sector (219+210) if the data to be transferred does not start at a sector boundary (S.B.),
- writing the data to be transferred (214, 215, 216), and
- write the tail (220) of the tail sector (213+220) if the data to be transferred does not end at a sector boundary (S.B.).

3. A method according to claim 1, **characterized in that** the first scatter gather list data structure (201; SGL1) comprises one scatter gather list element (105) referencing data to be transferred within a single sector of a disk location (203) and wherein the method further comprises a step of performing sector alignment of data to be transferred (214, 215, 216) prior to an unaligned write to the storage device (506), the step comprising:
- reading a single sector from the storage device (506) and store it in a temporary sector (217; 218), and
after the single sector is read
- writing the head of the single sector if the data to be transferred does not start at a sector boundary (S.B.),
- writing the data to be transferred, and
- write the tail of the single sector if the data to be transferred does not end at a sector boundary (S.B.).

4. A method according to claim 1, **characterized in that** the method further comprises a step of performing an unaligned read of data to be transferred (210, 211, 212, 213) from the storage device (506), the step comprising:
- reading every sector (219+210, 211, 212, 213+220) from the storage device (506),
- discarding a part (219) of the head sector (219+210) that does not comprise any of the data to be transferred if the data to be transferred does not start at a sector boundary (S.B.), and
- discarding a part (220) of the tail sector (213+220) that does not comprise any of the data to be transferred if the data to be transferred does not end at a sector boundary (S. B.).

5. A method according to claim 1, **characterized in that** the storage system further comprises
- a fifth scatter gather list data structure (230; SGL7) comprising one or more scatter gather list elements (105) referencing a part of the main memory (204) that is either source or destination of the data to be transferred,
- a sixth scatter gather list data structure (231; SGL8) comprising one or more scatter gather list elements (105) referencing a disk location (203) that is either source or destination of the data to be transferred,
and wherein the method further comprises a step of
- when a part of a transfer has taken place, then transferring reference to data of that part from the third data structure (208; SGL 5) to the sixth data structure (231; SGL8) and transferring data of that part from the fourth data structure (209; SGL6) to the fifth data structure (230; SGL7).

6. A method according to claim 5, **characterized in that** the storage system further comprises
- a seventh scatter gather list data structure (233; SGL3) comprising one or more scatter gather list elements (105) referencing a part of the main memory (204) that is either source or destination of the data to be transferred,
- an eighth scatter gather list data structure (232; SGL4) comprising one or more scatter gather list elements (105) referencing a disk location (203) that is either source or destination of the data to be transferred,
and wherein the method further comprises a step of
- performing reverse processing on the fifth scatter gather list data structure (230; SGL7) and the sixth scatter gather list data structure (231; SGL8), in order to recycle the temporary memory of the temporary head sector (217) and/or the temporary tail sector (218),
- generating the seventh scatter gather list data structure (233; SGL3) to make it consistent with the second scatter gather list data structure (202; SGL2) on the basis of the reverse processing, and
- generating the eighth scatter gather list data structure (232; SGL4) to make it consistent with the first scatter gather list data structure (201; SGL1) on the basis of the reverse processing.

7. A method according to claim 1, **characterized in that** said direction indication (205) is implemented as a single surplus bit among bits of a computer representation of the disk addresses according to ATA6.

8. A device for transferring data between a main memory and a storage device in a storage system, the storage system comprising
- a first scatter gather list data structure (201; SGL 1) arranged to comprise zero or more scatter gather list elements (105) referencing a disk location (203) that is either source or destination of the data to be transferred,
- a second scatter gather list data structure (202, SGL2) arranged to comprise zero or more scatter gather list elements (105) referencing a part of the main memory (204) that is either source or destination of the data to be transferred, and
- a direction indicator (205) for each scatter gather list element (105) of the first scatter gather list data structure (201, SGL 1) or for each scatter gather list element of the second scatter gather list data structure (202; SGL2), where the direction indicator (205) specifies whether the disk location (203) is source and the part of the main memory (204) is destination or specifies whether the disk location (203) is destination and the part of the main memory (204) is source,
**characterized in that** :
the storage system further comprises
- a third scatter gather list data structure (208;SGL5), and
- a fourth scatter gather list data structure (209;SGL6),
wherein the reading and writing in the storage system is represented by scatter gather list elements (105) in the third (208; SGL5) and the fourth (209; SGL6) data structure.

9. A device according to claim 8, **characterized in that** the device is further adapted to perform a step of sector alignment of data to be transferred (214,215,216) prior to an unaligned write to the storage device (506), the step comprising:
- reading a head sector (219+210) from the storage device (506) if the data to be transferred does not start at a sector boundary (S.B.) and storing it in a temporary head sector (217),
- reading a tail sector (213+220) from the storage device (506) if the data to be transferred does not end at a sector boundary (S.B.) and storing it in a temporary tail sector (218), and
after the head and tail sector (219+210;213+220) is read
- writing the head (219) of the head sector (219+210) if the data to be transferred does not start at a sector boundary (S.B.),
- writing the data to be transferred (214,215,216), and
- write the tail (220) of the tail sector (213+220) if the data to be transferred does not end at a sector boundary (S.B.).

10. A device according to claim 8, **characterized in that** the first scatter gather list data structure (201;SGL1) comprises one scatter gather list element (105) referencing data to be transferred within a single sector of a disk location (203) and wherein the device is further adapted to perform a step of sector alignment of data to be transferred (214, 215, 216) prior to an unaligned write to the storage device (506), the step comprising:
- reading a single sector from the storage device (506) and store it in a temporary sector (217; 218), and after the single sector is read
- writing the head of the single sector if the data to be transferred does not start at a sector boundary (S.B.),
- writing the data to be transferred, and
- write the tail of the single sector if the data to be transferred does not end at a sector boundary (S.B.).

11. A device according to claim 8, **characterized in that** said device is further adapted to perform a step of an unaligned read of data to be transferred (210, 211, 212, 214) from the storage device (506), the step comprising:
- reading a every sector (219+210, 211, 211, 213+220) from the storage device (506),
- discarding a part (219) of the head sector (219+210) that does not comprise any of the data to be transferred if the data to be transferred does not start at a sector boundary (S.B.), and
- discarding a part (220) of the tail sector (213+220) that does not comprise any of the data to be transferred if the data to be transferred does not end at a sector boundary (S.B.).

12. A device according to claim 8, **characterized in that** the storage system further comprises
- a fifth scatter gather list data structure (230; SGL7) comprising one or more scatter gather list elements (105) referencing a part of the main memory (204) that is either source or destination of the data to be transferred,
- a sixth scatter gather list data structure (231; SGL8) comprising one or more scatter gather list elements (105) referencing a disk location (203) that is either source or destination of the data to be transferred,
and wherein the device is further adapted to
- when a part of a transfer has taken place, then transferring reference to data of that part from the third data structure (208; SGL 5) to the sixth data structure (231; SGL8) and transferring data of that part from the fourth data structure (209; SGL6) to the fifth data structure (230; SGL7).

13. A device according to claim 12, **characterized in that** the storage system further comprises
- a seventh scatter gather list data structure (233; SGL3) comprising one or more scatter gather list elements (105) referencing a part of the main memory (204) that is either source or destination of the data to be transferred,
- an eighth scatter gather list data structure (232; SGL4) comprising one or more scatter gather list elements (105) referencing a disk location (203) that is either source or destination of the data to be transferred,
and wherein the device is further adapted to
- perform reverse processing on the fifth scatter gather list data structure (230; SGL7) and the sixth scatter gather list data structure (231; SGL8), in order to recycle the temporary memory of the temporary head sector (217) and/or the temporary tail sector (218),
- generate the seventh scatter gather list data structure (233; SGL3) to make it consistent with the second scatter gather list data structure (202; SGL2) on the basis of the reverse processing, and
- generate the eighth scatter gather list data structure (232; SGL4) to make it consistent with the first scatter gather list data structure (201; SGL1) on the basis of the reverse processing.

14. A device according to claim 8 **characterized in that** said direction indication (205) is implemented as a single surplus bit among bits of a computer representation of the disk addresses according to ATA6.

15. A computer readable medium having stored thereon instructions for causing one or more processing units to execute all the method steps according to any one of claims 1 - 7.

## Patentansprüche

1. Verfahren zum Übertragen von Daten zwischen einem Hauptspeicher (502) und einer Speicheranordnung (506) in einem Speichersystem, wobei das Speichersystem Folgendes umfasst:
- eine erste Streuerfassungslistendatenstruktur (201; SGL 1), vorgesehen um Enthalten von null oder mehr Streuerfassungslistenelementen (105), die sich auf eine Diskstelle (203) beziehen, die entweder Quelle oder Ziel der zu übertragenden Daten ist,
- eine zweite Streuerfassungslistendatenstruktur (202; SGL2), vorgesehen zum Enthalten von null oder mehr Streuerfassungslistenelementen (105), die sich auf einen Teil des Hauptspeichers (204) beziehen, der entweder Quelle oder Ziel der zu übertragenden Daten ist, und
- einen Richtungsindikator (205) für jedes Streuerfassungslistenelement (105) der ersten Streuerfassungslistendatenstruktur (201; SGL 1) oder für jedes Streuerfassungslistenelement der zweiten Streuerfassungslistendatenstruktur (202; SGL2), wobei der Richtungsindikator (205) spezifiziert, ob die Diskstelle (203) Quelle und der Teil des Hauptspeichers (204) Ziel ist oder spezifiziert, on die Diskstelle (203) Ziel und der Teil des Hauptspeichers Quelle ist,
wobei das Verfahren den nachfolgenden Verfahrensschritt umfasst, zum Erzeugen:
- einer ersten Streuerfassungslistendatenstruktur (201; SGL 1) und einer zweiten Streuerfassungslistendatenstruktur (202; SGL2),
**dadurch gekennzeichnet, dass** das Speichersystem weiterhin Folgendes umfasst:
- eine dritte Streuerfassungslistendatenstruktur (208; SGL 5), und
- eine vierte Streuerfassungslistendatenstruktur (209; SGL 6),
wobei das Auslesen und das Schreiben in das Speichersystem durch Streuerfassungslistenelemente (105) in der dritten (208; SGL5) und vierten (209; SGL6) Datenstruktur dargestellt wird.

2. Verfahren nach Anspruch 1, **dadurch gekennzeichnet, dass** das Verfahren weiterhin einen Schritt umfasst zum Durchführen einer Sektorausrichtung von Daten, die übertragen werden müssen (214, 215, 216) vor einem nicht ausgerichteten Schreibvorgang zu der Speicheranordnung (506), wobei dieser Schritt Folgendes umfasst:
- das Auslesen eines Kopfsektors (219+210) aus der Speicheranordnung (506), wenn die zu übertragenden Daten nicht an einer Sektorgrenze (S.B.) starten und das Speichern derselben in einem einstweiligen Kopfsektor (217),
- das Auslesen eines Schwanzsektors(213+220) aus der Speicheranordnung (506), wenn die zu übertragenden Daten nicht an einer Sektorgrenzen (S.B.) enden und das Speichern derselben in einem einstweiligen Schwanzsektor (218), und
nachdem der Kopf- und der Schwanzsektor (219+210; 213+220) ausgelesen worden ist,
- das Schreiben des Kopfes (219) des Kopfsektors (219+210), wenn die zu übertragenden Daten nicht an einer Sektorgrenze (S.B.) starten,
- das Schreiben der zu übertragenden Daten (214, 215, 216), und
- das Schreiben des Schwanzes (220) des Schwanzsektors (213+220), wenn die zu übertragenden Daten nicht an einer Sektorgrenze (S.B.) enden.

3. Verfahren nach Anspruch 1, **dadurch gekennzeichnet, dass** die erste Streuerfassungslistendatenstruktur (201; SGL 1) ein einziges Streuerfassungslistenelement (105) aufweist, das sich auf Daten bezieht, die übertragen werden müssen, und zwar innerhalb eines einzigen Sektors einer Diskstelle (203) und wobei das Verfahren weiterhin einen Schritt umfasst zum Durchführen einer Sektorausrichtung von Daten, die übertragen werden müssen (214, 215, 216), und zwar vor einem nicht ausgerichteten Schreibvorgang, zu der Speicheranordnung (506), wobei dieser Schritt Folgendes umfasst:
- das Auslesen eines einzigen Sektors aus der Speicheranordnung (506) und das Speichern desselben in einem einstweiligen Sektor (217; 218), und
nachdem der einzige Sektor ausgelesen worden ist,
- das Schreiben des Kopfes des einzigen Sektors, wenn die zu übertragenden Daten nicht bei einer Sektorgrenze (S.B.) starten,
- das Schreiben der zu übertragenden Daten, und
- das Schreiben des Schwanzes des einzigen Sektors, wenn die zu übertragenden Daten nicht bei einer Sektorgrenze (S.B.) enden.

4. Verfahren nach Anspruch 1, **dadurch gekennzeichnet, dass** das Verfahren weiterhin einen Schritt umfasst zum Durchführen einer nicht ausgerichteten Auslesung von Daten, die übertragen werden müssen (210, 211, 212, 213) aus der Speicheranordnung (506), wobei der Schritt Folgendes umfasst:
- das Auslesen jedes Sektors (219+210, 211, 212, 213+220) aus der Speicheranordnung (506),
- das Löschen eines Teils (219) des Kopfsektors (219+210), der überhaupt keine zu übertragenden Daten aufweist, wenn die zu übertragenden Daten nicht an einer Sektorgrenze (S.B.) starten, und
- das Löschen eines Teils (220) des Schwanzsektors (213+220), der überhaupt keine zu übertragenden Daten enthält, wenn die zu übertragenden Daten nicht an einer Sektorgrenze (S.B.) enden.

5. Verfahren nach Anspruch 1, **dadurch gekennzeichnet, dass** das Speichersystem weiterhin Folgendes umfasst:
- eine fünfte Streuerfassungslistendatenstruktur (230; SGL7), die ein oder mehr Streuerfassungslistenelemente (105) aufweist, die sich auf einen Teil des Hauptspeichers (204) beziehen, der entweder Quelle oder Ziel der zu übertragenden Daten ist,
- eine sechste Streuerfassungslistendatenstruktur (231; SGL8), die ein oder mehrere Streuerfassungslistenelemente (105) aufweist, die sich auf eine Diskstelle (203) beziehen, die entweder Quelle oder Ziel der zu übertragenden Daten ist,
und wobei das Verfahren weiterhin einen Schritt umfasst
- wenn ein Teil einer Übertragung stattgefunden hat, das Übertragen des Bezugswertes auf Daten dieses Teils von der dritten Datenstruktur (208; SGL 5) zu der sechsten Datenstruktur (231; SGL8) und das Übertragen von Daten dieses Teils von der vierten Datenstruktur (209; SGL6) zu der fünften Datenstruktur (230; SGL7).

6. Verfahren nach Anspruch 5, **dadurch gekennzeichnet, dass** das Speichersystem weiterhin Folgendes umfasst:
- eine siebente Streuerfassungslistendatenstruktur (233; SGL3) mit einem oder mehreren Streuerfassungslistenelementen (105), die sich auf einen Teil des Hauptspeichers (204) beziehen und entweder Quelle oder Ziel der zu übertragenden Daten ist,
- eine achte Streuerfassungslistendatenstruktur (232; SGL4) mit einem oder mehreren Streuerfassungslistenelementen (105), die sich auf eine Diskstelle (203) beziehen, die Quelle oder Ziel der zu übertragenden Daten ist,
und wobei das Verfahren weiterhin einen Schritt umfasst zum
- Durchführen einer umgekehrten Verarbeitung der fünften Streuerfassungslistendatenstruktur (231; SGL8) zum Regenerieren des einstweiligen Speichers des einstweiligen Kopfsektors (217) und/oder des einstweiligen Schwanzsektors (218),
- Erzeugen der siebenden Streuerfassungslistendatenstruktur (233; SGL3) um diese zu der zweiten Streuerfassungslistendatenstruktur (201; SGL1) einheitlich zu machen, und zwar auf Basis der Umkehrverarbeitung.

7. Verfahren nach Anspruch 1, **dadurch gekennzeichnet, dass** die genannte Richtungsangabe (205) als ein einziges Überschussbit unter den Bits einer Computerdarstellung der Diskadressen nach ATA6 implementiert wird.

8. Anordnung zum Übertragen von Daten zwischen einem Hauptspeicher und einer Speicheranordnung in einem Speichersystem, wobei das Speichersystem Folgendes umfasst:
- eine erste Streuerfassungslistendatenstruktur (201; SGL 1), vorgesehen zum Enthalten von Null oder mehr Streuerfassungslistenelementen (105) zu enthalten, die sich auf eine Diskstelle (203) beziehen, die entweder Quelle oder Ziel der zu übertragenden Daten ist,
- eine zweite Streuerfassungslistendatenstruktur (202; SGL2), vorgesehen um Null oder mehr Streuerfassungslistenelementen (105) zu enthalten, die sich auf einen Teil des Hauptspeichers (204) beziehen, der entweder Quelle oder Ziel der zu übertragenden Daten ist, und
- einen Richtungsindikator (205) für jedes Streuerfassungslistenelement (105) der ersten Streuerfassungslistendatenstruktur (201; SGL 1) oder für jedes Streuerfassungslistenelement der zweiten Streuerfassungslistendatenstruktur (202: SGL2), wobei der Richtungsindikator (205) spezifiziert, ob die Diskstelle (203) Quelle ist und der Teil des Hauptspeichers (204) Ziel ist, oder spezifiziert, ob die Diskstelle (203) Ziel ist und der Teil des Hauptspeichers (204) Quelle Informationssignal,
**dadurch gekennzeichnet, dass**
das Speichersystem weiterhin Folgendes umfasst:
- eine dritte Streuerfassungslistendatenstruktur (208; SGL5), und
- eine vierte Streuerfassungslistendatenstruktur (209; SGL6),
wobei das Auslesen und das Einschreiben in das Speichersystem durch Streuerfassungslistenelemente (105) in der dritten (208; SGL5) und der Vierten (209; SGL6) Datenstruktur dargestellt wird.

9. Anordnung nach Anspruch 8, **dadurch gekennzeichnet, dass** die Anordnung weiterhin dazu vorgesehen ist, einen Schritt der Sektorausrichtung von Daten durchzuführen, die übertragen (214, 215, 216) werden müssen, und zwar vor einem nicht ausgerichteten Schreibvorgang zu der Speicheranordnung (506), wobei der Schritt Folgendes umfasst:
- das Auslesen eines Kopfsektors (219+210) aus der Speicheranordnung (506), wenn die zu übertragenden Daten nicht an einer Sektorgrenze (S.B.) starten und das Speichern derselben in einem einstweiligen Kopfsektor (217),
- das Auslesen eines Schwanzsektors(213+220) aus der Speicheranordnung (506), wenn die zu übertragenden Daten nicht an einer Sektorgrenzen (S.B.) enden und das Speichern derselben in einem einstweiligen Schwanzsektor (218), und
nachdem der Kopf- und der Schwanzsektor (219+210; 213+220) ausgelesen worden ist,
- das Schreiben des Kopfes (219) des Kopfsektors (219+210), wenn die zu übertragenden Daten nicht an einer Sektorgrenze (S.B.) starten,
- das Schreiben der zu übertragenden Daten (214, 215, 216), und
- das Schreiben des Schwanzes (220) des Schwanzsektors (213+220), wenn die zu übertragenden Daten nicht an einer Sektorgrenze (S.B.) enden.

10. Anordnung nach Anspruch 8, **dadurch gekennzeichnet, dass** die erste Streuerfassungslistendatenstruktur (201; SGL 1) ein Streuerfassungslistenelement (105) aufweist, das sich auf Daten bezieht, die übertragen werden müssen, innerhalb eines einzigen Sektors einer Diskstelle (203) und wobei die Anordnung weiterhin dazu vorgesehen ist, einen Schritt der Sektorausrichtung von Daten durchzuführen, die übertragen werden müssen (214, 215, 216), und zwar vor einem nicht ausgerichteten Schreibvorgang zu der Speicheranordnung (506), wobei der Schritt Folgendes umfasst:
- das Auslesen eines einzigen Sektors aus der Speicheranordnung (506) und das Speichern desselben in einem einstweiligen Sektor (217; 218), und
nachdem der einzige Sektor ausgelesen worden ist,
- das Einschreiben des Kopfes des einzigen Sektors, wenn die zu übertragenden Daten nicht an einer Sektorgrenze (S.B.) starten,
- das Einschreiben der zu übertragenden Daten, und
- das Einschreiben des Schwanzes des einzigen Sektors, wenn die zu übertragenden Daten nicht an einer Sektorgrenze (S.B.) enden.

11. Anordnung nach Anspruch 8, **dadurch gekennzeichnet, dass** die genannte Anordnung weiterhin dazu vorgesehen ist, einen Schritt eines nicht ausgerichteten Auslesevorgangs zu übertragender Daten (210, 211, 212, 214) aus der Speicheranordnung (506) durchzuführen, wobei der Schritt Folgendes umfasst:
- das Auslesen jedes Sektors (219_210, 211, 213+220) aus der Speicheranordnung (506),
- das Löschen eines Teils (219) des Kopfsektors (219+210), der überhaupt keine zu übertragenden Daten aufweist, wenn die zu übertragenden Daten nicht an einer Sektorgrenze (S.B.) starten, und
- das Löschen eines Teils (220) des Schwanzsektors (213+220), der überhaupt keine zu übertragenden Daten enthält, wenn die zu übertragenden Daten nicht an einer Sektorgrenze (S.B.) enden.

12. Anordnung nach Anspruch 8, **dadurch gekennzeichnet, dass** das Speichersystem weiterhin Folgendes umfasst:
- eine fünfte Streuerfassungslistendatenstruktur (230; SGL7), die ein oder mehr Streuerfassungslistenelemente (105) aufweist, die sich auf einen Teil des Hauptspeichers (204) beziehen, der entweder Quelle oder Ziel der zu übertragenden Daten ist,
- eine sechste Streuerfassungslistendatenstruktur (231; SGL8), die ein oder mehrere Streuerfassungslistenelemente (105) aufweist, die sich auf eine Diskstelle (203) beziehen, die entweder Quelle oder Ziel der zu übertragenden Daten ist,
und wobei das Verfahren weiterhin einen Schritt umfasst
- wenn ein Teil einer Übertragung stattgefunden hat, das Übertragen des Bezugswertes auf Daten dieses Teils von der dritten Datenstruktur (208; SGL 5) zu der sechsten Datenstruktur (231; SGL8) und das Übertragen von Daten dieses Teils von der vierten Datenstruktur (209; SGL6) zu der fünften Datenstruktur (230; SGL7).

13. Anordnung nach Anspruch 12, **dadurch gekennzeichnet, dass** das Speichersystem weiterhin Folgendes umfasst:
- eine siebente Streuerfassungslistendatenstruktur (233; SGL3) mit einem oder mehreren Streuerfassungslistenelementen (105), die sich auf einen Teil des Hauptspeichers (204) beziehen und entweder Quelle oder Ziel der zu übertragenden Daten ist,
- eine achte Streuerfassungslistendatenstruktur (232; SGL4) mit einem oder mehreren Streuerfassungslistenelementen (105), die sich auf eine Diskstelle (203) beziehen, die Quelle oder Ziel der zu übertragenden Daten ist,
und wobei das Verfahren weiterhin einen Schritt umfasst zum
- Durchführen einer umgekehrten Verarbeitung der fünften Streuerfassungslistendatenstruktur (231; SGL8) zum Regenerieren des einstweiligen Speichers des einstweiligen Kopfsektors (217) und/oder des einstweiligen Schwanzsektors (218),
- Erzeugen der siebenden Streuerfassungslistendatenstruktur (233; SGL3) um diese zu der zweiten Streuerfassungslistendatenstruktur (201; SGL1) einheitlich zu machen, und zwar auf Basis der Umkehrverarbeitung.

14. Anordnung nach Anspruch 8, **dadurch gekennzeichnet, dass** die genannte Richtungsandeutung (205) als ein einziges Überschussbit unter den Bits einer Computerdarstellung der Diskadressen nach ATA6 implementiert wird.

15. Vom Computer auslesbares Medium, auf dem Instruktionen gespeichert sind um dafür zu sorgen, dass eine oder mehrere Verarbeitungseinheiten alle Verfahrensschritte nach den Ansprüchen 1-7 durchführen.

## Revendications

1. Procédé de transfert de données entre une mémoire principale (502) et un dispositif de stockage (506) dans un système de stockage, le système de stockage comprenant
- une première structure de données de liste disperser regrouper (201; SGL1) aménagée pour comprendre zéro élément de liste disperser regrouper (105) ou plus référençant un emplacement de disque (203) qui est soit la source soit la destination des données à transférer,
- une deuxième structure de données de liste disperser regrouper (202; SGL2) aménagée pour comprendre zéro éléments de liste disperser regrouper (105) ou plus référençant une partie de la mémoire principale (204) qui est soit la source soit la destination des données à transférer, et
- un indicateur de direction (205) pour chaque élément de liste disperser regrouper (105) de la première structure de données de liste disperser regrouper (201; SGL1) ou pour chaque élément de liste disperser regrouper de la deuxième structure de données de liste disperser regrouper (202; SGL2), l'indicateur de direction (205) spécifiant si l'emplacement de disque (203) est la source et la partie de la mémoire principale (204) est la destination ou spécifiant si l'emplacement de disque (203) est la destination et la partie de la mémoire principale (204) la source,
le procédé comprenant les étapes de génération
- d'une première structure de données de liste disperser regrouper (201; SGL 1) et d'une deuxième structure de données de liste disperser regrouper (202; SGL2),
**caractérisé en ce que** le système de stockage comprend de plus
- une troisième structure de données de liste disperser regrouper (208; SGL5), et
- une quatrième structure de données de liste disperser regrouper (209; SGL6),
dans lequel la lecture et l'écriture dans le système de stockage sont représentées par des éléments de liste disperser regrouper (105) dans la troisième (208; SGL5) et la quatrième (209; SGL6) structure de données.

2. Procédé selon la revendication 1, **caractérisé en ce que** le procédé comprend de plus une étape de réalisation d'alignement de secteur de données à transférer (214, 215, 216) avant une écriture non alignée sur le dispositif de stockage (506), l'étape comprenant:
- la lecture d'un secteur de tête (219+210) à partir du dispositif de stockage (506) si les données à transférer ne commencent pas sur une limite de secteur (S.B.) et son stockage dans un secteur de tête temporaire (217),
- la lecture d'un secteur de queue (213+220) à partir du dispositif de stockage (506) si les données à transférer ne se terminent pas sur une limite de secteur (S.B.) et son stockage dans un secteur de queue temporaire (218), et
après la lecture des secteurs de tête et de queue (219+210; 213+220)
- l'écriture de la tête (219) du secteur de tête (219+210) si les données à transférer ne commencent par sur une limite de secteur (S.B.),
- l'écriture des données à transférer (214, 215, 216), et
- l'écriture de la queue (220) du secteur de queue (213+220) si les données à transférer ne se terminent pas sur une limite de secteur (S.B.).

3. Procédé selon la revendication 1, **caractérisé en ce que** la première structure de données de liste disperser regrouper (201; SGL1) comprend un élément de liste disperser regrouper (105) référençant des données à transférer dans un secteur unique d'un emplacement de disque (203) et dans lequel le procédé comprend de plus une étape de réalisation d'alignement de secteur de données à transférer (214, 215, 216) avant une écriture non alignée sur le dispositif de stockage (506), l'étape comprenant:
- la lecture d'un secteur unique à partir du dispositif de stockage (506) et son stockage dans un secteur temporaire (217; 218), et
après que le secteur unique ait été lu,
- l'écriture de la tête du secteur unique si les données à transférer ne commencent pas sur une limite de secteur (S.B.),
- l'écriture des données à transférer, et
- l'écriture de la queue du secteur unique si les données à transférer ne se terminent pas sur une limite de secteur (S.B.).

4. Procédé selon la revendication 1, **caractérisé en ce que** le procédé comprend de plus une étape de réalisation d'une lecture non alignée de données à transférer (210, 211, 212, 213) à partir du dispositif de stockage (506), l'étape comprenant:
- la lecture de chaque secteur (219+210, 211, 212, 213+220) à partir du dispositif de stockage (506),
- l'écartement d'une partie (219) du secteur de tête (219+210) qui ne comprend aucune des données à transférer si les données à transférer ne commencent pas sur une limite de secteur (S.B.), et
- l'écartement d'une partie (220) du secteur de queue (213+220) qui ne comprend aucune des données à transférer si les données à transférer ne se terminent pas sur une limite de secteur (S.B.).

5. Procédé selon la revendication 1, **caractérisé en ce que** le système de stockage comprend de plus
- une cinquième structure de données de liste disperser regrouper (230; SGL7) comprenant un ou plusieurs éléments de liste disperser regrouper (105) référençant une partie de la mémoire principale (204) qui est soit la source soit la destination des données à transférer,
- une sixième structure de données de liste disperser regrouper (231; SGL8) comprenant un ou plusieurs éléments de liste disperser regrouper (105) référençant un emplacement de disque (203) qui est soit la source soit la destination des données à transférer,
et dans lequel le procédé comprend de plus une étape de
- quand une partie d'un transfert a eu lieu, transfert alors d'une référence aux données de cette partie à partir de la troisième structure de données (208; SGL5) vers la sixième structure de données (231; SGL8) et transfert de données de cette partie à partir de la quatrième structure de données (209; SGL6) à la cinquième structure de données (230; SGL7).

6. Procédé selon la revendication 5, **caractérisé en ce que** le système de stockage comprend de plus
- une septième structure de données de liste disperser regrouper (233; SGL3) comprenant un ou plusieurs éléments de liste disperser regrouper (105) référençant une partie de la mémoire principale (204) qui est soit la source soit la destination des données à transférer,
- une huitième structure de données de liste disperser regrouper (232; SGL4) comprenant un ou plusieurs éléments de liste disperser regrouper (105) référençant un emplacement de disque (203) qui est soit la source soit la destination des données à transférer,
et dans lequel le procédé comprend de plus une étape de
- réalisation d'un traitement inverse de la cinquième structure de données de liste disperser regrouper (230; SGL7) et de la sixième structure de données de liste disperser regrouper (231; SGL8), de façon à recycler la mémoire temporaire du secteur de tête temporaire (217) et/ou du secteur de queue temporaire (218),
- génération de la septième structure de données de liste disperser regrouper (233; SGL3) pour la rendre cohérente avec la deuxième structure de données de liste disperser regrouper (202; SGL2) sur la base du traitement inverse, et
- génération de la huitième structure de données de liste disperser regrouper (232; SGL4) pour la rendre cohérente avec la première structure de données de liste disperser regrouper (201; SGL1) sur la base du traitement inverse.

7. Procédé selon la revendication 1, **caractérisé en ce que** ladite indication de direction (205) est implémentée comme un bit de surplus unique parmi des bits d'une représentation informatique des adresses de disque selon ATA6.

8. Dispositif pour transférer des données entre une mémoire principale et un dispositif de stockage dans un système de stockage, le système de stockage comprenant
- une première structure de données de liste disperser regrouper (201; SGL1) aménagée pour comprendre zéro élément de liste disperser regrouper ou plus (105) référençant un emplacement de disque (203) qui est soit la source soit la destination des données à transférer,
- une deuxième structure de données de liste disperser regrouper (202; SGL2) aménagée pour comprendre zéro élément de liste disperser regrouper ou plus (105) référençant une partie de la mémoire principale (204) qui est soit la source soit la destination des données à transférer, et
- un indicateur de direction (205) pour chaque élément de liste disperser regrouper (105) de la première structure de données de liste disperser regrouper (201; SGL1) ou pour chaque élément de liste disperser regrouper de la deuxième structure de données de liste disperser regrouper (202; SGL2), l'indicateur de direction (205) spécifiant si l'emplacement de disque (203) est la source et la partie de la mémoire principale (204) est la destination ou spécifiant si l'emplacement de disque (203) est la destination et la partie de la mémoire principale (204) est la source,
**caractérisé en ce que**:
le système de stockage comprend de plus
- une troisième structure de données de liste disperser regrouper (208; SGL5), et
- une quatrième structure de données de liste disperser regrouper (209; SGL6),
dans lequel la lecture et l'écriture dans le système de stockage est représentée par des éléments de liste disperser regrouper (105) dans la troisième (208; SGL5) et la quatrième (209; SGL6) structure de données.

9. Dispositif selon la revendication 8, **caractérisé en ce que** le dispositif est de plus aménagé pour réaliser une étape d'alignement de secteur de données à transférer (214, 215, 216) avant une écriture non alignée sur le dispositif de stockage (506), l'étape comprenant:
- la lecture d'un secteur de tête (219+210) à partir du dispositif de stockage (506) si les données à transférer ne commencent pas sur une limite de secteur (S.B.) et son stockage dans un secteur de tête temporaire (217),
- la lecture d'un secteur de queue (213+220) à partir du dispositif de stockage (506) si les données à transférer ne se terminent pas sur une limite de secteur (S.B.) et son stockage dans un secteur de queue temporaire (218), et
après la lecture des secteurs de tête et de queue (219+210; 213+220)
- l'écriture de la tête (219) du secteur de tête (219+210) si les données à transférer ne commencent par sur une limite de secteur (S.B.),
- l'écriture des données à transférer (214, 215, 216), et
- l'écriture de la queue (220) du secteur de queue (213+220) si les données à transférer ne se terminent pas sur une limite de secteur (S.B.).

10. Dispositif selon la revendication 8, **caractérisé en ce que** la première structure de données de liste disperser regrouper (201; SGL1) comprend un élément de liste disperser regrouper (105) référençant des données à transférer dans un secteur unique d'un emplacement de disque (203) et dans lequel le dispositif est de plus aménagé pour réaliser une étape d'alignement de secteur de données à transférer (214, 215, 216) avant une écriture non alignée sur le dispositif de stockage (506), l'étape comprenant:
- la lecture d'un secteur unique à partir du dispositif de stockage (506) et son stockage dans un secteur temporaire (217; 218), et
après que le secteur unique ait été lu,
- l'écriture de la tête du secteur unique si les données à transférer ne commencent pas sur une limite de secteur (S.B.),
- l'écriture des données à transférer, et
- l'écriture de la queue du secteur unique si les données à transférer ne se terminent pas sur une limite de secteur (S.B.).

11. Dispositif selon la revendication 8, **caractérisé en ce que** le dispositif est de plus aménagé pour réaliser une étape d'une lecture non alignée de données à transférer (210, 211, 212, 214) à partir du dispositif de stockage (506), l'étape comprenant:
- la lecture de chaque secteur (219+210, 211, 211, 213+220) à partir du dispositif de stockage (506),
- l'écartement d'une partie (219) du secteur de tête (219+210) qui ne comprend aucune des données à transférer si les données à transférer ne commencent pas sur une limite de secteur (S.B.), et
- l'écartement d'une partie (220) du secteur de queue (213+220) qui ne comprend aucune des données à transférer si les données à transférer ne se terminent pas sur une limite de secteur (S.B.).

12. Dispositif selon la revendication 8, **caractérisé en ce que** le système de stockage comprend de plus
- une cinquième structure de données de liste disperser regrouper (230; SGL7) comprenant un ou plusieurs éléments de liste disperser regrouper (105) référençant une partie de la mémoire principale (204) qui est soit la source soit la destination des données à transférer,
- une sixième structure de données de liste disperser regrouper (231; SGL8) comprenant un ou plusieurs éléments de liste disperser regrouper (105) référençant un emplacement de disque (203) qui est soit la source soit la destination des données à transférer,
et dans lequel le dispositif est de plus aménagé pour
- quand une partie d'un transfert a eu lieu, transférer alors une référence aux données de cette partie à partir de la troisième structure de données (208; SGL5) à la sixième structure de données (231; SGL8) et le transfert de données de cette partie à partir de la quatrième structure de données (209; SGL6) à la cinquième structure de données (230; SGL7).

13. Dispositif selon la revendication 12, **caractérisé en ce que** le système de stockage comprend de plus
- une septième structure de données de liste disperser regrouper (233; SGL3) comprenant un ou plusieurs éléments de liste disperser regrouper (105) référençant une partie de la mémoire principale (204) qui est soit la source soit la destination des données à transférer,
- une huitième structure de données de liste disperser regrouper (232; SGL4) comprenant un ou plusieurs éléments de liste disperser regrouper (105) référençant un emplacement de disque (203) qui est soit la source soit la destination des données à transférer,
et dans lequel le dispositif est de plus aménagé pour
- réaliser un traitement inverse de la cinquième structure de données de liste disperser regrouper (230; SGL7) et de la sixième structure de données de liste disperser regrouper (231; SGL8), de façon à recycler la mémoire temporaire du secteur de tête temporaire (217) et/ou du secteur de queue temporaire (218),
- générer la septième structure de données de liste disperser regrouper (233; SGL3) pour la rendre cohérente avec la deuxième structure de données de liste disperser regrouper (202; SGL2) sur la base du traitement inverse, et
- générer la huitième structure de données de liste disperser regrouper (232; SGL4) pour la rendre cohérente avec la première structure de données de liste disperser regrouper (201; SGL1) sur la base du traitement inverse.

14. Dispositif selon la revendication 8, **caractérisé en ce que** ladite indication de direction (205) est implémentée comme un bit de surplus unique parmi des bits d'une représentation informatique des adresses de disque selon ATA6.

15. Support lisible par ordinateur possédant des instructions stockées pour amener une ou plusieurs unités de traitement à exécuter toutes les étapes de procédé selon l'une quelconque des revendications 1 à 7.
